# EUROPEAN PATENT APPLICATION

(11) **EP 4 340 182 A1**
(43) Date of publication of application: **20.03.2024**
(21) Application number: 22806772.4
(22) Date of filing: 10.05.2022
(51) Int. Cl.: H02K 1/27, H02K 1/28, H02K 15/03

(54) **PERMANENT MAGNET FOR LOW EDDY CURRENT LOSS OF PERMANENT MAGNET MOTOR AND PERMANENT MAGNET MOTOR**

(30) Priority: 11.05.2021 US 202163186880 P
(71) Applicant: Yantai Dongxing Magnetic Materials Inc., Yantai, Shandong 265500 (CN)
(72) Inventor: PENG, Zhongjie, Yantai, Shandong 265500 (CN); LI, Xiaoqun, Yantai, Shandong 265500 (CN); LIANG, Feng, Yantai, Shandong 265500 (CN); DING, Kaihong, Yantai, Shandong 265500 (CN)
(74) Representative: Gulde & Partner
(86) International application number: PCT/CN2022/092066
(87) International publication number: WO 2022/237809

(57) **Abstract**

The present invention falls in the field of permanent magnet motors, relates to a permanent magnet with low eddy current loss for a permanent magnet motor and a permanent magnet motor having such a permanent magnet. Permanent magnets include a first pole surface, a second pole surface, four side surfaces, and a plurality of embedded electrical insulation layers. The first pole surface is basically orthogonal to the magnetization direction of the permanent magnet, and the second pole surface is parallel to the first pole surface, a plurality of embedded electrical insulation layers are parallel to the magnetization direction of the permanent magnet, and at least one edge of each electrical insulation layer is neither parallel nor perpendicular to the magnetization direction of the permanent magnet. The electrical insulation layer in the permanent magnet is located in the area with high eddy current loss of the permanent magnet, which reduces the magnetic flux loss caused by the introduction of the embedded electrical insulation layer, avoids the increase of cost to a certain extent and plays a role in reducing the eddy current loss.

## Description

### Technical Field

The present invention relates to a permanent magnet with low eddy current loss for a permanent magnet motor and a permanent magnet motor having such a permanent magnet, which falls in the field of permanent magnet motor.

### Background

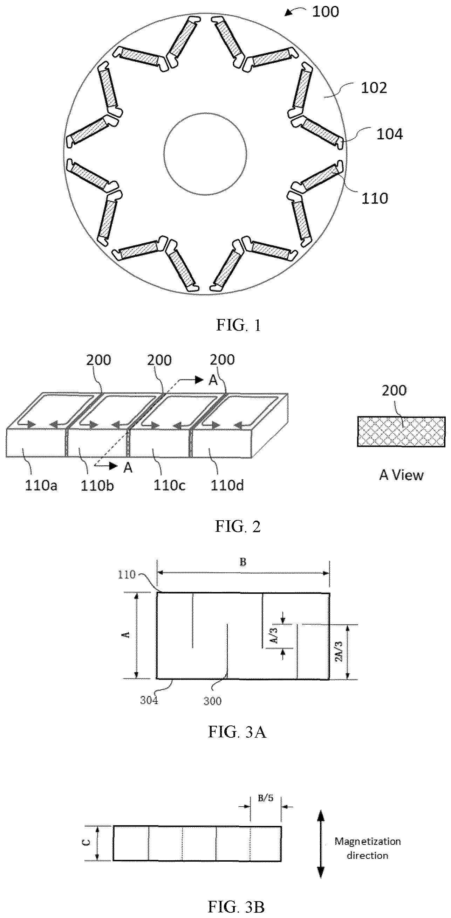

Permanent magnet motors include stator (not shown) and rotor. As shown in FIG. 1, the rotor 100 consists of a rotor core 102 made of laminated electrical steel and a plurality of permanent magnets 100 as for the rotor groove 104. When the coil in the stator of the motor is energized, a rotating magnetic field is generated, which interacts with the magnetic field generated by the permanent magnet of the rotor to generate torque and rotate the rotor. When a permanent magnet is subjected to an external magnetic field, including the magnetic field generated by the stator coils, eddy currents are induced in the permanent magnet, which increases the temperature of the permanent magnet. The increase in the temperature of the permanent magnet will cause the magnetic flux loss of the permanent magnet, thereby reducing the output torque and efficiency of the permanent magnet motor.

At present, in order to reduce the loss of magnetic flux caused by the temperature rise of the permanent magnet caused by the induced eddy current in the permanent magnet, it is mainly through the following ways: 1. Improve the temperature resistance characteristics of the permanent magnet (especially the magnetic performance at high temperature), this method will have a greater impact on the cost of the permanent magnet; 2. The permanent magnet adopts a split bonding method to reduce the eddy current loss (patent number CN104454852B, US 7973442 B2), as shown in FIG. 2, this method will reduce the material utilization rate of the permanent magnet, increased cost of permanent magnets; 3. The permanent magnet adopts the method of removing the electrical insulation layer of part of the material (patent number CN108631455A), as shown in FIGS. 3A and 3B. This method of grooving the insulation layer is characterized by the fact that the insulation layer in the slot is parallel to the magnetization direction and the edges of the insulation layer are parallel or perpendicular to the magnetization direction. FIGS. 3C, 3D and 3E and 3F show the method of grooving other magnets (patent numbers US 10666099 B1, US63 593 59 B1). Although the above three ways to reduce magnet eddy current loss will reduce the output torque and efficiency of permanent magnet motor caused by the increase of magnet temperature to a certain extent, they will have a great negative impact on the cost or magnetic flux of permanent magnet.

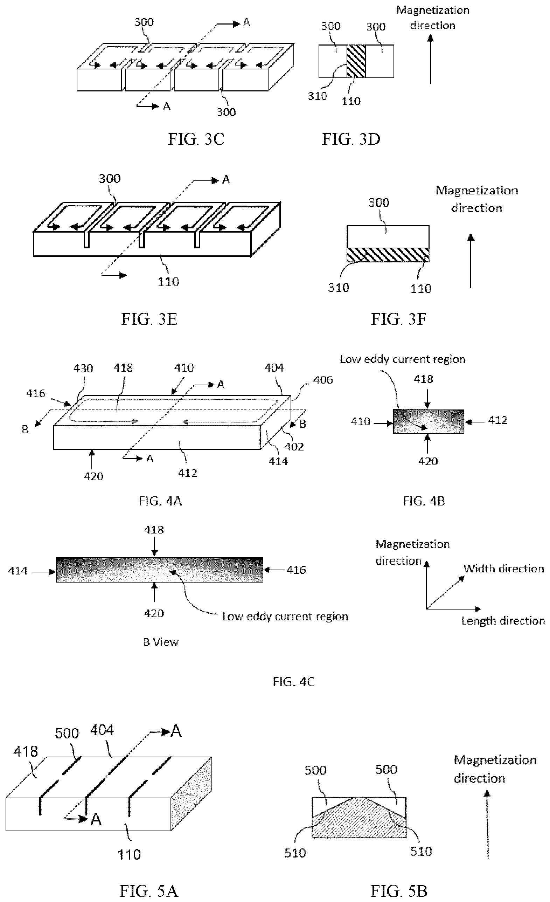

As shown in FIG. 4A is a typical rectangular permanent magnet structure shape, the permanent magnet has a magnetization direction, a first pole surface 418 and a second pole surface 420, and side surfaces 410, 412, 414 and 416. As shown in the eddy current path 430 in the permanent magnet, the eddy current loss in the magnet is mainly concentrated in the edge region of the permanent magnet. As shown in FIGS. 3A, 3C, and 3E, one method of giving a permanent magnet an electrical insulation layer is to make a groove in the permanent magnet to form an electrical insulation layer. These slots are distributed in the permanent magnet along the length or width of the magnet, and the permanent magnet material in the inner part of the slot is excised, resulting in a decrease in the volume of the permanent magnet, which in turn leads to a large loss of magnetic flux. As shown in FIGS. 4A, 4B, and 4C, eddy current losses in the center of the magnet are low, and the removal of permanent magnet material in these regions has little effect on the reduction of eddy current losses. Since the magnet grooving method described above causes the electrical insulation layer to penetrate the thickness of the permanent magnet, resulting in the removal of part of the permanent magnet material in the region with low eddy current (the center region of the magnet), the magnet slotting method described above will cause unnecessary magnet flux loss. The above structural defects also apply to permanent magnets with non-rectangular polyhedra (e.g. permanent magnets with a C-shaped cross-section).

### Summary

In view of the disadvantages of the above methods, the present invention proposes a permanent magnet with low eddy current loss for permanent magnet motor and a permanent magnet motor having the permanent magnet structure, the purpose is to reduce the loss caused by eddy current in the permanent magnet motor and the loss of magnet flux, while avoiding a large increase in the cost of permanent magnet.

In order to reduce the eddy current loss of the permanent magnet while reducing the loss of magnetic flux of the unnecessary magnet, the present invention provides a permanent magnet having a special structure. The permanent magnet provided by the present invention has a first pole surface, a second pole surface, four side surfaces and a plurality of embedded electrical insulation layers, the first pole surface is basically orthogonal to the magnetization direction of the permanent magnet (for permanent magnets with a rectangular cross-sectional shape, the first pole surface is orthogonal to the magnetization direction of the permanent magnet; However, for a permanent magnet with a cross-sectional shape of C-shape, the magnetization direction of the first pole surface and the permanent magnet is not completely orthogonal, there is a certain angle), the second pole surface is parallel to the first pole surface, a plurality of embedded electrical insulation layers are parallel to the magnetization direction of the permanent magnet and at least one edge of each electrical insulation layer is neither parallel nor perpendicular to the magnetization direction of the permanent magnet. The electrical insulation layer in the permanent magnet provided by the present invention is located in the region of high eddy current loss of the permanent magnet. By avoiding the electrical insulation layer in the low eddy current loss region of the permanent magnet, the permanent magnet provided by the present invention can retain the material in the permanent magnet region to the greatest extent, reduce the magnetic flux loss caused by the introduction of an embedded electrical insulation layer, thereby avoiding the increase in cost to a certain extent and playing a role in reducing eddy current loss.

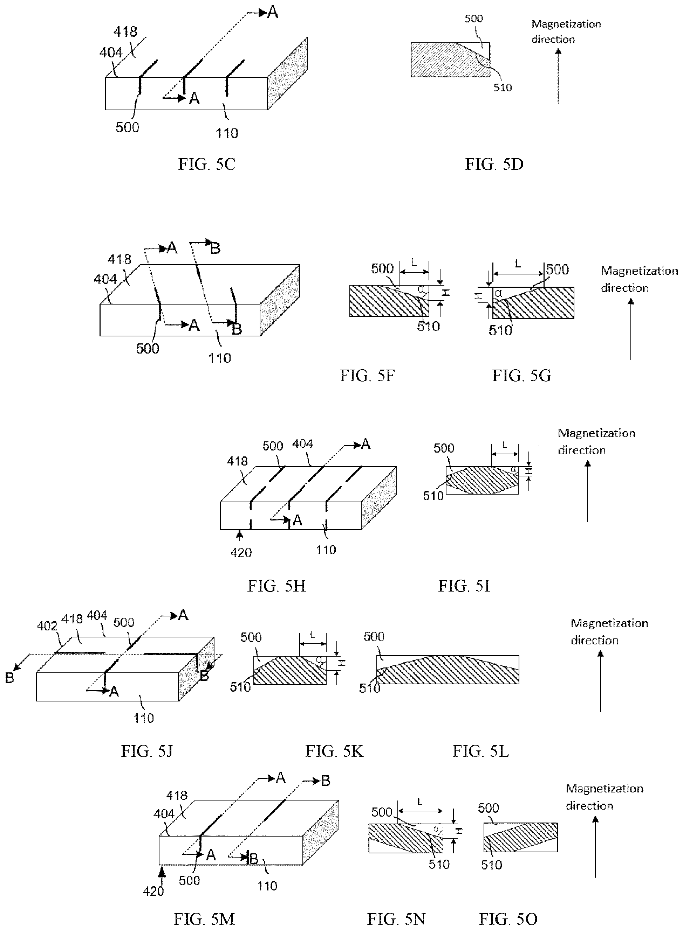

Based on the above analysis, the type and distribution of the electrical insulation layer are adjusted to achieve the purpose of reducing the temperature rise of the magnet caused by eddy current loss, which mainly has the following structure:
As shown in FIGS. 5A, 5C, 5E, 5H, 5J, and 5M, each electrical insulation layer intersects with a single edge on the first pole surface or the second pole surface of the permanent magnet, and is at an angle to the edge of the intersecting magnet.

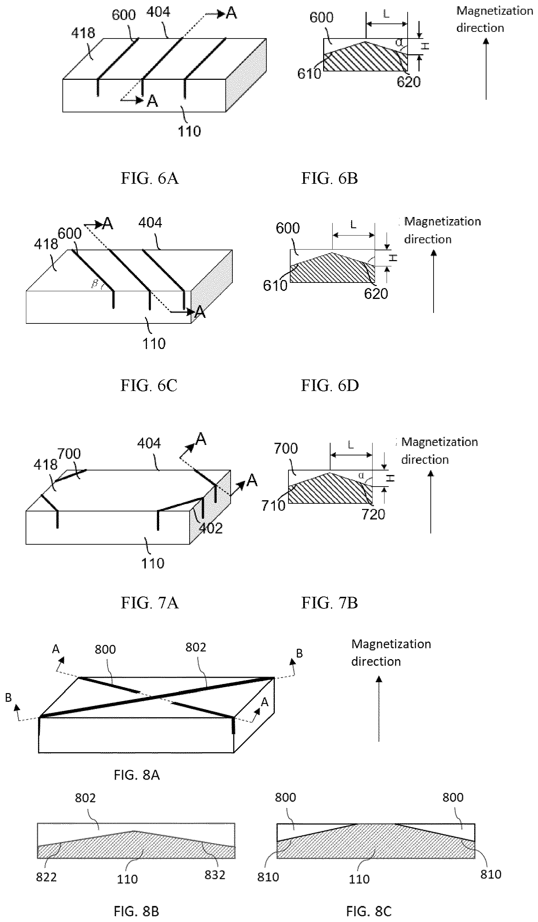

As shown in FIGS. 6A and 6C, each electrical insulation layer intersects two parallel edges along the length or width of the permanent magnet.

As shown in FIG. 7A, each electrical insulation layer intersects on the first pole surface or two intersecting edges on the second pole surface.

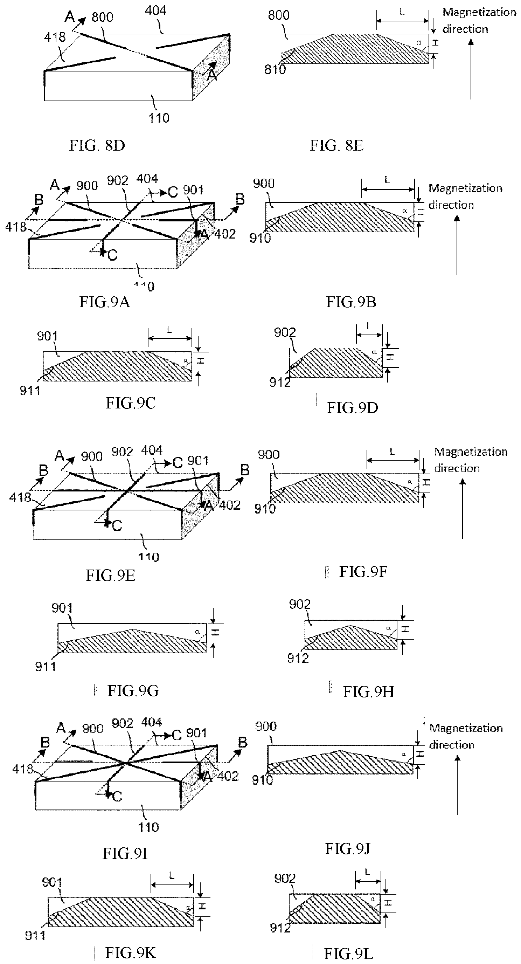

As shown in FIGS. 8A and 8D, the electrical insulation layer intersects the angle of the first pole surface or the second pole surface and follows the diagonal face of the permanent magnet.

As shown in FIGS. 9A, 9E, and 9I, the shape of the electrical insulation layer formed by the random combination of the above methods and its distribution mode in the permanent magnet, the electrical insulation layer intersects with the first pole surface or the second pole surface.

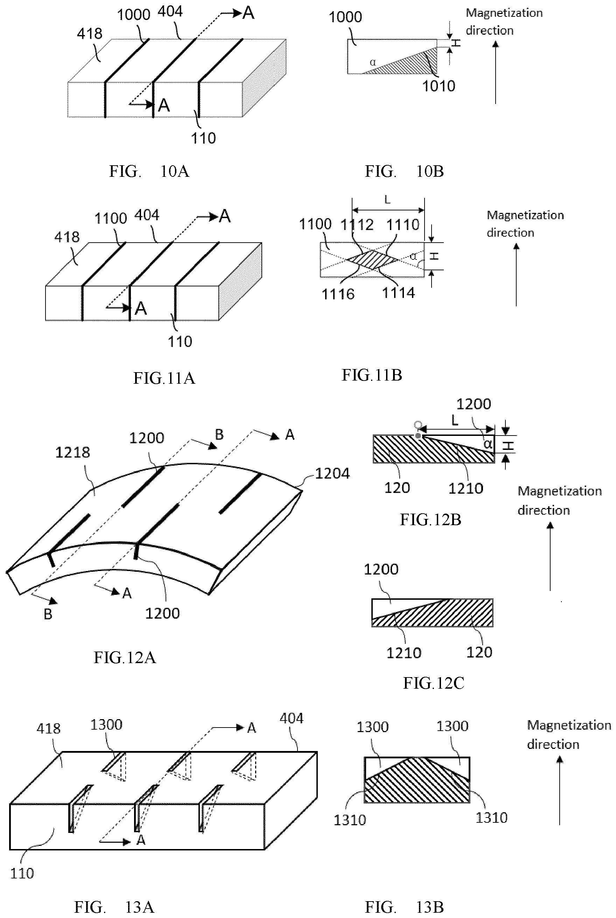

As shown in FIG. 10A, each electrical insulation layer intersects three edges in the length or width direction of the permanent magnet.

As shown in FIG. 11A, each electrical insulation layer intersects four edges in the length or width direction of the permanent magnet.

As shown in FIG. 12A, each electrical insulation layer intersects a prism in the length or width direction of the permanent magnet.

The material of the above electrical insulation layer can be a mixture of ceramics, epoxy resin, air or several insulating materials. For example, grooving a sintered permanent magnet can give the permanent magnet an electrical insulation layer with air as an insulating material (the air itself is insulated, which naturally fills the groove to form an electrical insulation layer). After grooving on the permanent magnet, the groove is filled with epoxy resin or other insulating materials, and the electrical insulation layer of different insulation materials can be obtained in the permanent magnet. In the production process of permanent magnets, if a layer of ceramic powder is applied to the location of the electrical insulation layer in the permanent magnet material powder blank, and then pressed and sintered, the permanent magnet can have an electrical insulation layer with ceramic as the insulating material.

The common feature of the above electrical insulation layer is that the electrical insulation layer is parallel to the magnetization direction of the permanent magnet, and at least one edge of each electrical insulation layer is neither parallel nor perpendicular to the magnetization direction of the permanent magnet, and the edge is α at an angle to the magnetization direction, and the angle α range is between 0 ° and 180 °, and is not equal to 90 °. In addition, the area of all electrical insulation layers on the permanent magnet constitutes the total area of the electrical insulation layer, and the total area of the electrical insulation layer depends on the requirements for reducing the eddy current loss of the permanent magnet.

### Drawings

FIG. 1 is a schematic of the rotor structure of the existing permanent magnet motor IPM;
FIG. 2 is a schematic of a segmented permanent magnet that is representative of the prior art;
FIG. 3A is the main view of an insulating permanent magnet that is representative of the prior art;
FIG. 3B is a top view of FIG. 3A;
FIG. 3C is a schematic of another insulating permanent magnet representative of prior art;
FIG. 3D is a schematic of Profile A in FIG. 3C;
FIG. 3E is a schematic of another insulating permanent magnet that is representative of the prior art;
FIG. 3F is a schematic of Profile A in FIG. 3E;
FIG. 4A is a schematic of the distribution of eddy currents generated in a permanent magnet;
FIG. 4B is a schematic of the distribution of eddy currents generated by the permanent magnet at Profile A shown in FIG. 4A;
and 4C is a schematic of the distribution of eddy currents generated by the permanent magnet at Profile B as shown in FIG. 4A;
FIG 5A is a perspective view of a structure of a first embodiment of the present invention;
FIG. 5B is a schematic view of Profile A in FIG. 5A;
FIG 5C is a perspective view of another structure of a first embodiment of the present invention;
FIG. 5D is a schematic of Profile A in FIG. 5C;
FIG 5E is a perspective view of another structure of a first embodiment of the present invention;
FIG. 5F is a schematic view of Profile A in FIG. 5E;
FIG. 5G is a schematic of Profile B in FIG. 5E;
FIG 5H is a perspective view of another structure of a first embodiment of the present invention;
FIG. 5I is a schematic of Profile A in FIG. 5H;
FIG 5J is a perspective view of another structure of a first embodiment of the present invention;
FIG. 5K is a schematic of Profile A in FIG. 5J;
FIG. 5L is a schematic of Profile B in FIG. 5J;
FIG 5M is a perspective view of another structure of a first embodiment of the present invention;
FIG. 5N is a schematic of Profile A in FIG. 5M;
FIG. 5O is a schematic of Profile B in FIG. 5M;
FIG 6A is a perspective view of a structure of a second embodiment of the present invention;
FIG. 6B is a schematic of Profile A in FIG. 6A;
FIG 6C is a perspective view of another structure of a second embodiment of the present invention;
FIG. 6D is a schematic of Profile A in FIG. 6C;
FIG 7A is a perspective view of a structure of a third embodiment of the present invention;
FIG. 7B is a schematic of Profile A in FIG. 7A;
FIG 8A is a perspective view of an exemplary structure of a fourth embodiment of the present invention;
FIG. 8B is a schematic view of Profile A in FIG. 8A;
FIG. 8C is a schematic of Profile B in FIG. 8A;
FIG 8D is a perspective view of another structure of a fourth embodiment of the present invention;
FIG. 8D is a schematic of Profile A in FIG. 8E ;
FIG 9A is a perspective view of a structure of a fifth embodiment of the present invention;
FIG. 9B is a schematic of Profile A in FIG. 9A;
FIG. 9C is a schematic of Profile B in FIG. 9A;
FIG. 9D is a schematic of Profile C in FIG. 9A;
FIG 9E is a perspective view of another structure of a fifth embodiment of the present invention;
FIG. 9F is a schematic of Profile A in FIG. 9E;
FIG. 9G is a schematic of Profile B in FIG. 9E;
FIG. 9H is a schematic of Profile C in FIG. 9E;
FIG 9I is a perspective view of another structure of the fifth embodiment of the present invention;
FIG. 9J is a schematic of Profile A in FIG. 9I;
FIG. 9K is a schematic of Profile B in FIG. 9I;
FIG. 9L is a schematic of Profile C in FIG. 9I;
FIG 10A is a perspective view of a structure of a sixth embodiment of the present invention;
FIG. 10B is a schematic view of Profile A in FIG. 10A;
FIG 11A is a perspective view of a structure of a seventh embodiment of the present invention;
FIG. 11B is a schematic of Profile A in FIG. 11A;
FIG 12A is a perspective view of a structure of the eighth embodiment of the present invention;
FIG. 12B is a schematic of Profile A in FIG. 12A;
FIG. 12C is a schematic of Profile B in FIG. 12A;
FIG 13A is a perspective view of a structure and a schematic of Profile A of the ninth embodiment of the present invention;
FIG. 13B is a schematic of Profile A in FIG. 13A;

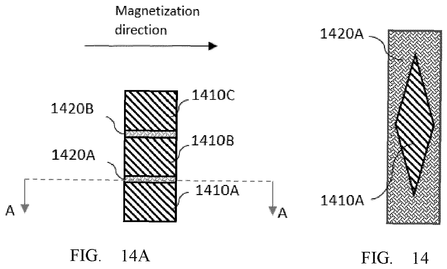

FIG 14A is a perspective view of a structure of the tenth embodiment of the present invention;
FIG. 14B is a schematic of Profile A in FIG. 14A.

### Specific Embodiment

The embodiments of the present invention are further described below in conjunction with the accompanying drawings:
Based on the existing technology for reducing eddy currents, the present invention studies the eddy current reduction scheme from other angles. As shown in FIG. 3A, 3B, 3C, 3D, 3E, 3F, the permanent magnet is electrically insulated to form an electrical insulation layer, these grooves are distributed in the permanent magnet along the length or width of the magnet, and part of the permanent magnet material in the slot is excised, resulting in a decrease in the volume of the permanent magnet, which in turn leads to a large loss of magnetic flux. As shown in FIGS. 4A, 4B, and 4C, the vortex in the center and lower regions of the magnet is low, and the removal of permanent magnet material in these regions has little effect on the eddy current reduction.

Therefore, the object of the present invention is to minimize the loss of magnetic flux caused by the introduction of an electrical insulation layer into the permanent magnet, by adjusting the shape of the electrical insulation layer and its position distribution to avoid the removal of the permanent magnet material at the center of the permanent magnet as much as possible, and the thickness of the electrical insulation layer is small (≤ 0.3mm), this method can retain the magnetic flux of the permanent magnet to the greatest extent.

Below, according to the accompanying drawings, several embodiments of permanent magnets having an electrical insulation layer of the present invention are described.

FIGS. 5A, 5B show a structure of the first embodiment of the present invention, the first pole surface 418 of the permanent magnet intersects at least one electrical insulation layer 500, each electrical insulation layer 500 is orthogonal to a edge 404 of the first pole surface 418 along the length of the permanent magnet (may also be orthogonal to a edge 402 of the first pole surface 418 along the width direction of the permanent magnet, not shown), and each electrical insulation layer 500 an edge 510 is neither parallel nor orthogonal to the magnetization direction of the permanent magnet. The dimensions L, H and angle α and number of electrical insulation layers are determined based on the total area of the electrical insulation layer.

FIGS. 5C and 5D show another structure of the first embodiment of the present invention, the first pole surface 418 of the permanent magnet intersects at least one electrical insulation layer 500, each electrical insulation layer intersects only one edge 404 of the first pole surface 418 along the length of the permanent magnet (may also intersect only one edge 402 of the first pole surface 418 along the width direction of the permanent magnet, not shown), and each electrical insulation layer 500 edge 510 is neither parallel nor orthogonal to the magnetization direction of the permanent magnet. This electrical insulation layer method minimizes the magnetic flux loss caused by the introduction of an electrical insulation layer into the permanent magnet when the eddy current is concentrated on only one side of the permanent magnet. The dimensions L, H and angle α and number of electrical insulation layers are determined based on the total area of the electrical insulation layer.

FIGS. 5E, 5F, 5G shows another structure of the first embodiment of the present invention, the first pole surface 418 of the permanent magnet intersects at least with an electrical insulation layer 500, and a portion of the electrical insulation layer 500 intersects with a edge 404 of the first pole surface 418 at an angle along the length of the permanent magnet, Another part of the electrical insulation layer intersects with the other edge 404 of the first pole surface at an angle along the length of the permanent magnet (it may also be that a portion of the electrical insulation layer 500 intersects with an edge 402 of the first pole surface 418 at an angle along the width of the permanent magnet, and the other part of the electrical insulation layer 500 intersects with an edge 402 of the second pole surface 420 at an angle along the width of the permanent magnet, not shown), the electrical insulation layer is parallel to the magnetization direction of the permanent magnet. Each edge 510 of electrical insulation layer 500 is neither parallel nor orthogonal to the magnetization direction of the permanent magnet. The angle between the electrical insulation layer and the intersecting permanent magnet edge 404 is not equal to 90°. The dimensions L, H and angle α and number of electrical insulation layers are determined based on the total area of the electrical insulation layer.

FIGS. 5H, 5I show another structure of the first embodiment of the present invention, the first pole surface 418 of the permanent magnet and the second pole surface 420 intersect at least with an electrical insulation layer 500, wherein a set of electrical insulation layers 500 orthogonal to the first pole surface 418 along the length of the permanent magnet 418 an edge 404, Another set of electrical insulation layers 500 orthogonal to an edge 404 of the second pole surface 420 along the length of the permanent magnet (may also be a group of electrical insulation layers 500 orthogonal to the first pole surface 418 along the direction of the permanent magnet width, another set of electrical insulation layer 500 orthogonal to an edge 402 of the second pole surface 420 along the permanent magnet width direction, not shown), and each edge 500 of the electrical insulation layer 500 is neither parallel nor orthogonal to the magnetization direction of the permanent magnet. The dimensions L, H and angle α and number of electrical insulation layers are determined based on the total area of the electrical insulation layer.

FIGS. 5J, 5K, 5L shows another structure of the first embodiment of the present invention, the first pole surface 418 of the permanent magnet intersects at least one electrical insulation layer 500, in which one set of electrical insulation layers orthogonally to the two parallel sides 404 of the first pole surface 418 along the length of the permanent magnet, the other set of electrical insulation layers orthogonal to the two parallel sides 402 of the first pole surface 418 along the width of the permanent magnet, each electrical insulation layer 500 only intersects with one edge of the permanent magnet, And each electrical insulation layer 500 edge 510 is neither parallel nor orthogonal to the magnetization direction of the permanent magnet. The dimensions L, H and angle α and number of electrical insulation layers are determined based on the total area of the electrical insulation layer.

FIG. 5M, 5N5O shows another structure of the first embodiment of the present invention, the first pole surface 418 of the permanent magnet and the second pole surface 420 intersect at least one electrical insulation layer 500, wherein part of the electrical insulation layer 500 is orthogonal to the edge 404 of the first pole surface 418 in the length direction, and the other part of the electrical insulation layer intersects in the length direction to the edge 404 of the second pole surface 420. Each electrical insulation layer only intersects with a magnet edge 404, and the depth of the electrical insulation layer does not penetrate the thickness of the permanent magnet, the electrical insulation layer is parallel to the magnetization direction of the magnet (may also be part of the electrical insulation layer 500 orthogonal to the edge 402 of the first pole surface 418 in the width direction, the other part of the electrical insulation layer intersects in the width direction to the edge 402 of the second pole surface 420, each electrical insulation layer only intersects with a magnet edge 402, not shown). One edge 510 of each electrical insulation layer is neither parallel nor orthogonal to the magnetization direction of the magnet. The dimensions L, H and angle α and number of electrical insulation layers are determined based on the total area of the electrical insulation layer.

FIGS. 6A, 6B show a structure of a second embodiment of the present invention, the first pole surface of the permanent magnet 418 intersects at least with an electrical insulation layer 600, each electrical insulation layer 600 is orthogonal to the two parallel sides 404 of the first pole surface 418 along the length of the permanent magnet (may also be orthogonal to the two parallel sides 402 of the first pole surface 418 along the width direction of the permanent magnet), the electrical insulation layer is parallel to the magnetization direction of the permanent magnet, The two edges 610 and 620 of each electrical insulation layer 600 are neither parallel nor orthogonal to the magnetization direction of the permanent magnet. The dimensions L, H and angle α and number of electrical insulation layers are determined based on the total area of the electrical insulation layer.

FIGS. 6C and 6D show another structure of the second embodiment of the present invention, the first pole surface 418 of the permanent magnet intersects at least one electrical insulation layer 600, each electrical insulation layer intersects at two parallel sides 404 of the first pole surface 418 along the length of the permanent magnet, and the electrical insulation layer intersects at an angle of β to the edge 404 (it may also be that each electrical insulation layer intersects at two parallel sides 402 of the first pole surface 418 along the width of the permanent magnet, and the electrical insulation layer intersects at an angle of β angle to the edge 402, not shown); Further, the two edges 610 and 620 of each electrical insulation layer 600 are neither parallel nor orthogonal to the magnetization direction of the permanent magnet, and the β angle is not 90°. The dimensions L, H and angle α and number of electrical insulation layers are determined based on the total area of the electrical insulation layer.

FIGS. 7A, 7B show a structure of a third embodiment of the present invention, the first pole surface 418 of the permanent magnet intersects at least one electrical insulation layer 700, each electrical insulation layer only intersects with the first pole surface 418 two intersecting edges (edge 404 and edge 402) intersect and each electrical insulation layer 700 two edges 710 and 720 are neither parallel nor orthogonal to the magnetization direction of the permanent magnet. The dimensions L, H and angle α and number of electrical insulation layers are determined based on the total area of the electrical insulation layer.

FIGS. 8A and 8B show a structure of the fourth embodiment of the present invention, the first pole surface 418 of the permanent magnet intersects with two groups of electrical insulation layers 800 and 802, in which one set of electrical insulation layers 800 intersects with one angle of the first pole surface 418 along the diagonal direction of the permanent magnet, and the other group of electrical insulation layer 802 intersects with two angles of the first pole surface 418 along the diagonal surface of the permanent magnet. One edge 810 of each electrical insulation layer 800 and two edges of the electrical insulation layer 802 822 and 832 are neither parallel nor orthogonal to the magnetization direction of the magnet. The dimensions L, H and angle α and number of electrical insulation layers are determined based on the total area of the electrical insulation layer.

FIGS. 8C and 8D show another structure of the fourth embodiment of the present invention, the first pole surface 418 of the permanent magnet intersects at least one electrical insulation layer 800, each electrical insulation layer 800 intersects with an angle of the first pole surface 418 along the diagonal direction of the permanent magnet. One edge 810 of each electrical insulation layer 800 is neither parallel nor orthogonal to the magnetization direction of the magnet. The dimensions L, H and angle α and number of electrical insulation layers are determined based on the total area of the electrical insulation layer.

FIGS. 9A, 9B, 9C, 9D is the first structure of the fifth embodiment of the present invention, FIGS. 9E, 9F, 9G, 9H is the second structure of the fifth embodiment of the present invention, FIGS. 9I, 9J, 9K, 9L is the third structure of the fifth embodiment of the present invention. The first embodiment to the fourth embodiment of the present invention The arrangement structure of the above various electrical insulation layers in the permanent magnet may be arbitrarily combined to form a new electrical insulation layer (900, 901, 902), the electrical insulation layer (900, 901, 902) is parallel to the magnetization direction of the magnet, and each electrical insulation layer has at least one edge (910, 911, 912) neither parallel nor orthogonal to the magnetization direction of the magnet. The dimensions L, H, α and number of electrical insulation layers are determined according to the total area of the insulation layer. FIGS. 10A, 10B are a structure of the sixth embodiment of the present invention, at least one electrical insulation layer 1000 intersects with a permanent magnet 110, the electrical insulation layer 1000 intersects along the length of the permanent magnet with three parallel edges 404 of the permanent magnet (may also intersect along the width of the permanent magnet with three parallel edges 402 of the permanent magnet), the electrical insulation layer is parallel to the magnetization direction of the permanent magnet, and one edge 1010 of each electrical insulation layer 1000 is neither parallel nor orthogonal to the magnetization direction of the permanent magnet. The dimensions L, H and angle α and number of electrical insulation layers are determined based on the total area of the electrical insulation layer.

FIGS. 11A, 11B are a structure of the seventh embodiment of the present invention, at least one electrical insulation layer 1100 intersects with a permanent magnet 110, the electrical insulation layer 1100 intersects four parallel edges 404 of the magnet along the length of the permanent magnet (may also intersect four parallel edges 402 of the permanent magnet along the width of the permanent magnet), the electrical insulation layer is parallel to the magnetization direction of the magnet, each electrical insulation layer four edges 1110, 1112, 1114, and 1116 are neither parallel nor orthogonal to the magnetization direction of the magnet. The dimensions, H and angles of the electrical insulation layer α as well as the quantity, are determined according to the total area of the insulation layer.

FIGS. 12A, 12B, 12C is a structure of the eighth embodiment of the present invention, the electrical insulation layer 1200 intersects with a prism 1204 of the permanent magnet 120 along the tangential direction of the outer pole face 1218 of the C-shaped permanent magnet 120, the electrical insulation layer 1200 is parallel to the magnetization direction of the magnet, and one edge 1210 of each electrical insulation layer is neither parallel nor orthogonal to the magnetization direction of the magnet. The dimensions L, H, α and number of electrical insulation layers are determined according to the total area of the insulation layer. FIGS. 13A, 13B are a structure of the ninth embodiment of the present invention. The first pole surface 418 of the permanent magnet intersects at least one slot 1300, each slot 1300 is orthogonal to the first pole surface 418 along the length of the permanent magnet 418 edge 404 (may also be orthogonal to the first pole surface 418 along the direction of the permanent magnet width, an edge 402), and one edge 1310 of each slot 1300 is neither parallel nor orthogonal to the magnetization direction of the permanent magnet. The insulating material of the electrical insulation layer in this permanent magnet is air in the open groove.

FIGS. 14A, 14B is a structure of the tenth embodiment of the present invention. A layer of insulation material powder 1420A is placed on top of a layer of permanent magnet material powder 1410A, and the insulation material powder layer 1420A does not completely cover the permanent magnet material powder layer 1410A to form a double-layer permanent magnet material powder block; Several double-layer permanent magnet material powder blocks are stacked together to form a multi-layer permanent magnet material powder block 1400; Orientation and pressing molding of multi-layer permanent magnet material powder block 1400; Sintering of multi-layer permanent magnet material after molding; The sintered multilayer permanent magnet material body is annealed.

The common feature of the above embodiments is: the electrical insulation layer is only distributed in the region with the highest eddy current density (as shown in the black area of FIG. 4 in FIG. A and View B), avoiding the removal of the permanent magnet material in the region with lower eddy current, that is, the center region of the magnet, thereby reducing the magnetic flux loss of the permanent magnet due to the introduction of an electrical insulation layer into the permanent magnet, and the effect on reducing eddy current loss remains unchanged.

The above structure is the main electrical insulation layer form of the permanent magnet proposed in the present invention, the main structural feature is that the permanent magnet comprises at least one electrical insulation layer, and at least one edge of the electrical insulation layer is neither parallel nor orthogonal to the magnetization direction of the permanent magnet. Of course, the electrical insulation layer structure to which the present invention relates is not limited to the above structure, and can be achieved by a variety of combinations and changing the direction of the electrical insulation layer, but its characteristics follow the above structural features.

## Claims

1. A permanent magnet for low eddy current loss of permanent magnet motor, wherein it includes a first pole surface, a second pole surface, four side surfaces and a plurality of embedded electrical insulation layers, the first pole surface is basically orthogonal to the magnetization direction of the permanent magnet, the second pole surface is parallel to the first pole surface, a plurality of embedded electrical insulation layers are parallel to the magnetization direction of the permanent magnet and at least one edge of each electrical insulation layer is neither parallel nor perpendicular to the magnetization direction of the permanent magnet.

2. The permanent magnet according to Claim 1, wherein each electrical insulation layer intersects at an angle to one edge of the permanent magnet along the length or width direction of the permanent magnet, the angle is between 0 ° and 180 °, and the edge defining the intersection of the electrical insulation layer and the permanent magnet is the intersecting permanent magnet edge.

3. The permanent magnet according to Claim 2, wherein all electrical insulation layers intersect with the same edge of the first pole surface along the length or width direction of the permanent magnet.

4. The permanent magnet according to Claim 2, wherein the intersecting permanent magnet edge is two parallel edges of the first pole surface and the second pole surface along the length and/or width direction of the permanent magnet.

5. The permanent magnet according to Claim 2, wherein the angle between the electrical insulation layer and the edge of the intersecting permanent magnet is 90°.

6. The permanent magnet according to Claim 1, wherein each electrical insulation layer intersects at an angle to the two edges of the permanent magnet along the length or width direction of the permanent magnet, the angle is between 0 ° and 180 °, and the edge defining the intersection of the electrical insulation layer and the permanent magnet is the intersecting permanent magnet edge.

7. The permanent magnet according to Claim 6, wherein the intersecting permanent magnet edge is two parallel edges of the first pole surface along the length and/or width of the permanent magnet and two parallel edges of the second pole surface along the length and/or width of the permanent magnet.

8. The permanent magnet according to Claim 6, wherein the intersecting permanent magnet edge is two vertically intersecting edges of the first pole surface and/or the second pole surface.

9. The permanent magnet according to Claim 1, wherein each electrical insulation layer intersects with the first pole surface and/or an angle of the second pole surface along the diagonal direction of the permanent magnet.

10. The permanent magnet according to Claim 1, wherein each electrical insulation layer intersects the first pole surface and/or two diagonals of the second pole surface along the diagonal direction of the permanent magnet.

11. The permanent magnet according to Claim 1, wherein in the electrical insulation layer, at least one electrical insulation layer intersects the edge of the first pole surface and/or the second pole surface, and at least one electrical insulation layer intersects with the first pole surface and/or a corner of the second pole surface.

12. The permanent magnet according to Claim 1, wherein the electrical insulation layer intersects at an angle to the three edges of the permanent magnet along the length or width direction of the permanent magnet, and the angle is between 0 ° and 180 °.

13. The permanent magnet according to Claim 1, wherein the various electrical insulation layers intersect at an angle to the four edges of the permanent magnet along the length or width direction of the permanent magnet, and the angle is between 0 ° and 180 °.

14. The permanent magnet according to Claim 1, wherein a groove is made on the permanent magnet, the tank is filled with insulating material or air, or an electrical insulation layer is formed on the inner wall of the tank to obtain an electrical insulation layer.

15. The permanent magnet according to Claim 1, wherein the cross-section of the permanent magnet is rectangular or C-shaped.

16. A permanent magnet motor, including a stator, a rotor supported to rotate relative to the stator and a plurality of permanent magnets mounted on the rotor, wherein the permanent magnet is any of the permanent magnets in Claims 1~15, the first pole surface diverges from the rotor center in the radius direction of the rotor, and the second pole surface faces the rotor center along the rotor radius.

17. The permanent magnet motor according to Claim 16, wherein the permanent magnet is mounted in the rotor groove of the rotor or mounted on the outer diameter surface of the rotor.
